# EUROPÄISCHE PATENTSCHRIFT

(11) **EP 1 340 299 B1**
(45) Veröffentlichungstag und Bekanntmachung des Hinweises auf die Patenterteilung: **30.05.2007**
(21) Anmeldenummer: 01978153.3
(22) Anmeldetag: 20.09.2001
(51) Int. Cl.: H02G 11/00, F16G 13/16

(54) **ENERGIEFÜHRUNGSKETTE**
ENERGY DRAG CHAIN
CHAINE DE GUIDAGE D'ENERGIE

(30) Priorität: 21.09.2000 DE 20016363 U
(43) Veröffentlichungstag der Anmeldung: 03.09.2003
(73) Patentinhaber: igus GmbH, 51147 Köln (DE)
(72) Erfinder: BLASE, Frank, 51429 Bergisch Gladbach (DE)
(74) Vertreter: Stachow, Ernst-Walther
(86) Internationale Anmeldenummer: PCT/DE2001/003600
(87) Internationale Veröffentlichungsnummer: WO 2002/025790

(56) Entgegenhaltungen:
- GB-A- 2 200 716
- US-A- 5 240 209

## Beschreibung

Die Erfindung betrifft eine Energieführungskette zum Führen von Kabeln, Schläuchen oder dergleichen zwischen zwei relativ zueinander beweglichen Anschlusspunkten, wobei die Kette durch einen einzigen Laschenstrang mit gelenkig miteinander verbundenen und gegeneinander abwinkelbaren Kettenlaschen gebildet wird und an zumindest einigen der Kettenlaschen eine Tragvorrichtung mit einem in Kettenlängsrichtung offenen Raum zur Aufnahme der Kabel vorgesehen ist, wobei die Tragvorrichtung mindestens einen biegeelastischen Streifen mit zwei biegeelastischen Enden umfasst, die in Längsrichtung zueinander in verschiedenen Positionen aneinander festlegbar sind.

Eine derartige Energieführungskette ist aus der GB-A-2 200 716 bekannt. Bei dieser Kette umfasst die Tragvorrichtung mindestens einen biegeelastischen Streifen mit zwei biegeelastische Enden zur Befestigung eines Kabels bzw. eines Schlauchs innerhalb eines aus der Kettenlasche und zumindest an einer Seite in den Randbereichen der Kettenlasche angeordneten starren Querstegen gebildeten U-förmigen Aufnahmeraums. Der biegeelastische Streifen ist als Kabelbinder ausgebildet, der sich durch Öffnungen in der Kettenlasche erstreckt und das Kabel bzw. den Schlauch sowie einen Teil des Laschenkörpers umschließt. Der schlaufenförmige Kabelbinder kann jedoch in den Öffnungen durch Bewegungen des Kabels bzw. Schlauchs beim Verfahren der Kette verrutschen, so dass sich die Befestigung des Kabels bzw. des Schlauchs dadurch lockern kann. Außerdem gewähren die Kabelbinder nur eine unzureichende Sicherheit der Befestigung bei äußeren Einwirkungen, wie Stößen, gegen die Kabel oder Schläuche. Daher sind diese durch die seitlich in den Randbereichen der Kettenlaschen angeordneten starren Querstege und deren freien Enden miteinander verbindende weitere Kabelbinder geschützt. Durch diese Maßnahme wird insgesamt die Halte- und Schutzeinrichtung für die Kabel oder Schläuche relativ aufwändig.

Der Erfindung liegt die Aufgabe zugrunde, eine Energieführungskette, insbesondere eine leichte und relativ langsam verfahrbare Energieführungskette, der eingangs genannten Art so weiter zu bilden, dass die Befestigung der Kabel, Schläuche oder dergleichen möglichst einfach und sicher gestaltet werden kann.

Diese Aufgabe wird bei einer erfinderischen Ausführung dadurch gelöst, dass der biegeelastische Streifen in Form einer Schlaufe durch Öffnungen in biegeelastischen Stegen geführt ist, die seitlich an den Randbereichen der Kettenlasche angeformt sind und eine Vielzahl von Öffnungen in unterschiedlicher Höhe zum Hindurchführen des biegeelastischen Streifens aufweisen, so dass die biegeelastischen Stege und der biegeelastische Streifen am Umfang der Kabel, Schläuche oder dergleichen anlegbar sind.

In einer besonders einfachen Weiterbildung dieser Lösung besteht der biegeelastische Streifen aus einem Kabelbinder.

Die Aufgabe wird bei einer anderen erfinderischen Ausführung dadurch gelöst, dass zwei biegeelastische Streifen in Form von Stegen vorgesehen sind, die mit ihrem einen Ende seitlich in jeweils einem Randbereich an der Kettenlasche angeformt sind und Befestigungselemente zur Festlegung aneinander in verschiedenen Positionen aufweisen.

Aufgrund der beiden erfinderischen Lösungsvorschläge ist das Befestigungsmittel für die Kabel, Schläuche oder dergleichen in stabiler Weise an den Kettenlaschen angeordnet. Auch können die seitlichen Stege eine höhere Stabilität als die bekannten Kabelbinder aufweisen, da sie nicht derart biegeelastisch wie diese ausgebildet sein müssen, um durch Öffnungen in den Kettenlaschen hindurchgeführt werden. Daher ermöglichen beide Lösungen insbesondere bei leichten und relativ langsam verfahrbaren Energieführungsketten einen optimalen Kompromiss zwischen einer einfachen und sicheren Gestaltung des Befestigungsmittels für die Kabel oder Schläuche.

Weiterhin kann der Aufnahmeraum weitestgehend variabel an die Querschnittsfläche der Kabel oder Schläuche angepasst werden, da auf starre Teile der Tragvorrichtung, wie zum Beispiel bekannte Querstege und Verbindungsstege, ganz verzichtet werden kann. Insbesondere der erste erfinderische Lösungsvorschlag ermöglicht aufgrund der biegeelastischen Stege und des in unterschiedlicher Höhe an diesen anbringbaren biegeelastischen Streifens einen größeren, variablen Aufnahmeraum, der an den Querschnitt des Kabelstrangs der an den Querschnitt des Kabelstrangs anpassbar ist.

Als bevorzugte Weiterbildung des zweiten erfinderischen Lösungsvorschlags kann einer der biegeelastischen Streifen in Längsrichtung verteilte Öffnungen und der andere biegeelastische Streifen in Längsrichtung verteilte Noppen zum Einpressen in die Öffnungen aufweisen.

Als Befestigungselemente kommen jedoch alle geeigneten Mittel zur variablen und vorzugsweise lösbaren Verbindung der biegeelastischen Streifen in Frage.

In einer anderen Weiterbildung des zweiten erfindungsgemäßen Lösungsvorschlags sind ein längerer biegeelastischer Streifen mit in Längsrichtung verteilten Öffnungen und ein kürzerer biegeelastischer Streifen mit an der Außenseite in Längsrichtung angeordneten, im Längsschnitt zahnförmigen Noppen zum Einrasten in die Öffnungen vorgesehen, wobei der kürzere biegeelastische Streifen an seiner Außenseite vor und hinter den Noppen angeordnete Führungslaschen zur Halterung des umgebogenen längeren biegeelastischen Streifens an der Außenseite des kürzeren biegeelastischen Streifens aufweist.

In einer besonders einfachen Ausführung der erfindungsgemäßen Lösungen sind die Kettenlaschen gekröpft ausgebildet mit jeweils einem bezüglich der Tragvorrichtung nach außen gekröpften Bereich und einem nach innen gekröpften Bereich, die Verbindungsmittel zur gelenkigen Verbindung der Kettenlasche mit benachbarten Kettenlaschen aufweisen, wobei an dem nach außen gekröpften Bereich einer Lasche innen liegend der nach innen gekröpfte Bereich der benachbarten Lasche anliegt.

Zur einfachen Konstruktion der Energieführungskette kann auch beitragen, dass zur gelenkigen Verbindung der Kettenlaschen untereinander Zapfen in einem Gelenkbereich und dazu korrespondierende Öffnungen im anderen Gelenkbereich einer jeden Kettenlasche vorgesehen sind.

Zum einfachen Zusammenhalt der Kettenlaschen ist vorzugsweise eine Rastverbindung zwischen den Zapfen und Öffnungen der Kettenlaschen vorgesehen.

Besonders günstige Kräfte- und Stabilitätsverhältnisse liegen dann vor, wenn die erfindungsgemäße Tragvorrichtung etwa in der Mitte zwischen den Gelenkachsen der Kettenlaschen angeordnet ist.

Die erfindungsgemäßen Energieführungsketten eignen sich insbesondere zum Verfahren auf einer horizontalen Unterlage. Die Kettenlaschen liegen dann mit einer Seite auf der Unterlage auf. Auf der nach oben weisenden Seite der Kettenlaschen können die Kabel auf einfachste Weise in die geöffnete Tragvorrichtung eingelegt werden. Beim Schließen der Tragvorrichtung legt sich diese eng und gegebenenfalls unter Vorspannung an den Umfang des eingelegten Kabelstranges an.

Einige Ausführungsbeispiele der Erfindung werden im Folgenden anhand der Zeichnung näher beschrieben. In der Zeichnung zeigen:
- Fig. 1: eine Ansicht der zur Tragvorrichtung weisenden Seite einer Kettenlasche,
- Fig. 2: eine stirnseitige Ansicht in Richtung des Pfeils B der Kettenlasche gemäß Fig. 1,
- Fig. 3: eine Ansicht der Kettenlasche gemäß Fig. 1 in Richtung des Pfeils C,
- Fig. 4: eine stirnseitige Ansicht der Kettenlasche gemäß Fig. 1 in Richtung des Pfeils B mit daran befestigtem Kabelstrang mit relativ großem Querschnitt,
- Fig. 5: eine stirnseitige Ansicht der Kettenlasche gemäß Fig. 1 in Richtung des Pfeils B mit daran befestigtem Kabelstrang relativ kleinen Querschnitts,
- Fig. 6: eine Ansicht der zur Tragvorrichtung weisenden Seite einer anderen Kettenlasche,
- Fig. 7: eine stirnseitige Ansicht der in Fig. 6 gezeigten Kettenlasche in Richtung des Pfeils D,
- Fig. 8: eine Ansicht der in Fig. 6 gezeigten Kettenlasche in Richtung des Pfeils E,
- Fig. 9: eine stirnseitige Ansicht gemäß Fig. 7 mit um einen Kabelstrang festgelegter Tragvorrichtung,
- Fig. 10: eine Ansicht der zur Tragvorrichtung weisenden Seite einer weiteren Kettenlasche,
- Fig. 11: eine stirnseitige Ansicht der in Fig. 10 gezeigten Kettenlasche in Richtung des Pfeils F,
- Fig. 12: eine Ansicht der in Fig. 10 gezeigten Kettenlasche in Richtung des Pfeils G,
- Fig. 13: eine stirnseitige Ansicht gemäß Fig. 11 mit um einen Kabelstrang festgelegter Tragvorrichtung.

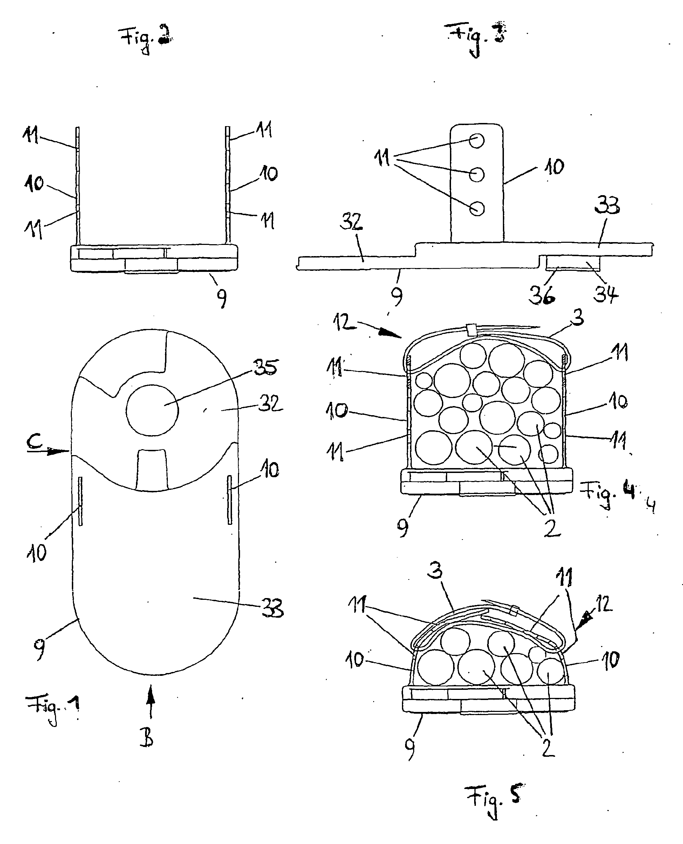

Das in den Figuren 1 bis 5 dargestellte Ausführungsbeispiel zeigt seitlich in den Randbereichen der Kettenlasche 9 angeordnete biegeelastische Stege 10, die eine Vielzahl von Öffnungen 11 in unterschiedlicher Höhe zum Hindurchführen des biegeelastischen Streifens 3 aufweisen. Der biegeelastische Streifen 3 ist in Form einer Schlaufe durch zwei gegenüberliegende Öffnungen 11 in den Stegen 10 geführt. Der schlaufenförmige biegeelastische Streifen 3 bildet somit das der Kettenlasche 9 gegenüberliegende Teil der Tragvorrichtung, die sich im vorliegenden Ausführungsbeispiel aus den Stegen 10 und dem biegeelastischen Streifen 3 zusammensetzt.

Die Stege 10 sind einstückig an die Kettenlasche 9 angeformt.

Die Tragvorrichtung 12 kann an den Querschnitt des Kabelstrangs angepasst werden, indem der biegeelastische Streifen 3 durch geeignete Öffnungen 11 in den Stegen 10 geführt und dann in Form einer Schlaufe zusammengezogen wird, so dass sich die biegeelastischen Stege 10 und der biegeelastische Streifen 3 am Umfang des Kabelstrangs anlegen.

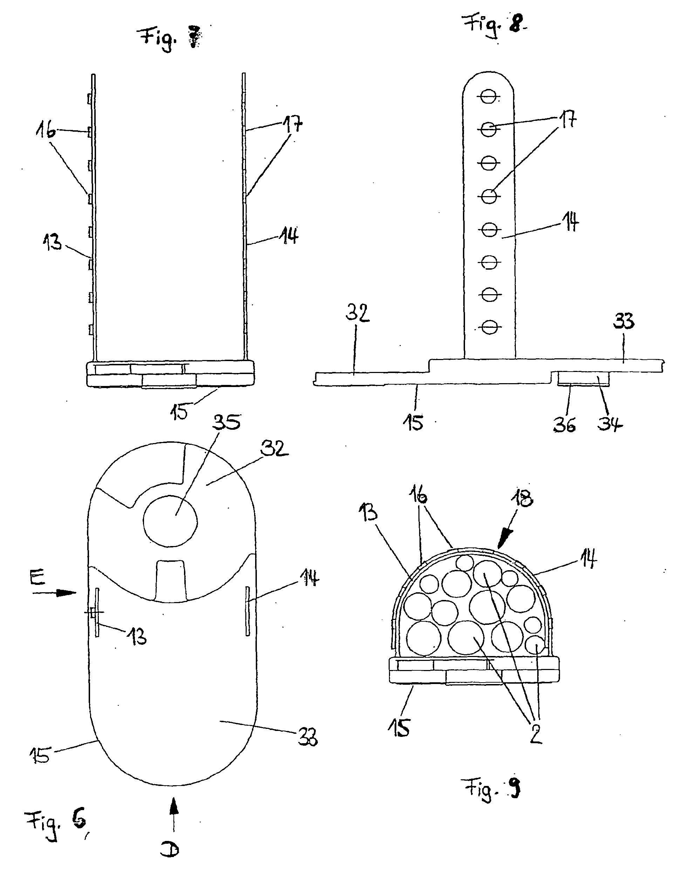

Fig. 4 zeigt eine solche Anordnung bei relativ großem Querschnitt des Kabelstrangs, während Fig. 5 eine engere Bindung um einen relativ kleinen Querschnitt eines Kabelstrangs darstellt.

Bei dem in den Figuren 6 bis 9 dargestellten Ausführungsbeispiel sind zwei biegeelastische Streifen 13 und 14 in Form von Stegen seitlich an den Randbereichen der Kettenlasche 15 angeformt. Die beiden biegeelastischen Streifen haben etwa die gleiche Länge. Die biegeelastischen Streifen 13 und 14 weisen Befestigungselemente zur Festlegung aneinander in verschiedenen Positionen auf.

Als Befestigungselemente sind an dem in Fig. 7 links dargestellten biegeelastischen Streifen 13 über seine Höhe verteilte nach außen weisende Noppen 16 vorgesehen, während der in Fig. 11 rechts gezeigte biegeelastische Streifen 14 über seine Höhe verteilte Öffnungen 17 aufweist. Die Noppen 16 und Öffnungen 17 haben gleiche Abstände, so dass die beiden biegeelastischen Streifen 13 und 14 übereinander gebogen und die Noppen 16 in die Öffnungen 17 in unterschiedlichen Positionen zueinander eingepresst werden können.

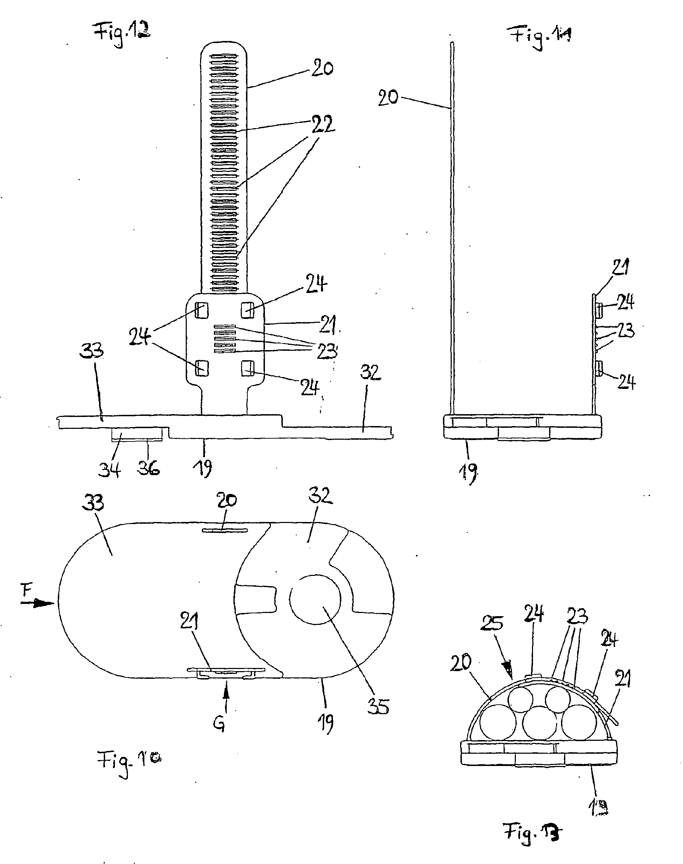

Wie Fig. 9 zeigt, kann die aus den biegeelastischen Streifen 13 und 14 bestehende Tragvorrichtung 18 durch unterschiedliche Wahl der Überlappung der beiden biegeelastischen Streifen 13 und 14 an den Querschnitt eines Kabelstrangs angepasst werden.

Bei dem in den Figuren 10 bis 13 gezeigten Ausführungsbeispiel sind ebenfalls seitlich in den Randbereichen der Kettenlasche 19 zwei biegeelastische Streifen 20 und 21 mit Befestigungselementen zur Festlegung aneinander in verschiedenen Positionen angeformt.

Der in Fig. 11 links dargestellte elastische Streifen 20 weist über seine Höhe verteilte, sich parallel zur Kettenlasche 19 erstreckende schlitzförmige Öffnungen 22 auf. Der in Fig. 15 rechts gezeigte elastische Streifen 21 ist kürzer ausgebildet und an seiner Außenseite mit sich in Längsrichtung der Kettenlasche erstreckenden übereinander angeordneten und im Längsschnitt zahnförmigen Noppen 23 versehen. Vor und hinter den Noppen 23 sind am biegeelastischen Streifen 21 Führungslaschen 24 zur Halterung des umgebogenen biegeelastischen Streifens 20 an der Außenseite des biegeelastischen Streifens 21 vorgesehen. Wird das freie Ende des biegeelastischen Streifens 20 durch die Führungslaschen 24 des gegenüberliegenden biegeelastischen Streifens 21 gezogen, so können die Noppen 23 in die Öffnungen 22 in unterschiedlichen Positionen einrasten.

Die aus den beiden biegeelastischen Streifen 20 und 21 bestehende Tragvorrichtung 25 lässt sich ebenfalls durch Umbiegen der Streifen 20 und 21 und Festziehen auf den Querschnitt eines Kabelstrangs einstellen.

### Bezugszeichenliste

- 2: Kabel
- 3.: biegeelastischer Streifen
- 9: Kettenlasche
- 10: Steg
- 11: Öffnung
- 12: Tragvorrichtung
- 13: biegeelastischer Streifen
- 14: biegeelastischer Streifen
- 15: Kettenlasche
- 16: Noppen
- 17: Öffnung
- 18: Tragvorrichtung
- 19: Kettenlasche
- 20: biegeelastischer Streifen
- 21: biegeelastischer Streifen
- 22: Öffnung
- 23: Noppen
- 24: Führungslasche
- 25: Tragvorrichtung
- 32: nach außen gekröpfter Bereich
- 33: nach innen gekröpfter Bereich
- 34: Zapfen
- 35: Öffnungen
- 36: Vorsprung

## Patentansprüche

1. Energieführungskette zum Führen von Kabeln, Schläuchen oder dergleichen zwischen zwei relativ zueinander beweglichen Anschlusspunkten, wobei die Kette durch einen einzigen Laschenstrang mit gelenkig miteinander verbundenen und gegeneinander abwinkelbaren Kettenlaschen (9) gebildet wird und an zumindest einigen der Kettenlaschen (9) eine Tragvorrichtung (12) mit einem in Kettenlängsrichtung offenen Raum zur Aufnahme der Kabel (2) vorgesehen ist, wobei die Tragvorrichtung (12) mindestens einen biegeelastischen Streifen (3) mit zwei biegeelastischen Enden umfasst, die in Längsrichtung zueinander in verschiedenen Positionen aneinander festlegbar sind, **dadurch gekennzeichnet, dass** der biegeelastische Streifen (3) in Form einer Schlaufe durch Öffnungen (11) in biegeelastischen Stegen (10) geführt ist, die seitlich an den Randbereichen der Kettenlasche (9) angeformt sind und eine Vielzahl von Öffnungen (11) in unterschiedlicher Höhe zum Hindurchführen des biegeelastischen Streifens (3) aufweisen, so dass die biegeelastischen Stege (10) und der biegeelastische Streifen (3) am Umfang der Kabel, Schläuche oder dergleichen anlegbar sind.

2. Energieführungskette nach Anspruch 1, **dadurch gekennzeichnet, dass** der biegeelastische Streifen (3) aus einem Kabelbinder besteht.

3. Energieführungskette zum Führen von Kabeln, Schläuchen oder dergleichen zwischen zwei relativ zueinander beweglichen Anschlusspunkten, wobei die Kette durch einen einzigen Laschenstrang mit gelenkig miteinander verbundenen und gegeneinander abwinkelbaren Kettenlaschen (15; 19) gebildet wird und an zumindest einigen der Kettenlaschen (15; 19) eine Tragvorrichtung (18; 25) mit einem in Kettenlängsrichtung offenen Raum zur Aufnahme der Kabel (2) vorgesehen ist, wobei die Tragvorrichtung (18; 25) mindestens einen biegeelastischen Streifen (13, 14; 20, 21) mit zwei biegeelastischen Enden umfasst, die in Längsrichtung zueinander in verschiedenen Positionen aneinander festlegbar sind, **dadurch gekennzeichnet, dass** zwei biegeelastische Streifen (13, 14; 20, 21) in Form von Stegen vorgesehen sind, die mit ihrem einen Ende seitlich in jeweils einem Randbereich an der Kettenlasche (15; 19) angeformt sind und Befestigungselemente zur Festlegung aneinander in verschiedenen Positionen aufweisen.

4. Energieführungskette nach Anspruch 3, **dadurch gekennzeichnet, dass** seiner der biegeelastischen Streifen (14) in Längsrichtung verteilte Öffnungen und der andere biegeelastische Streifen (13) in Längsrichtung verteilte Noppen (16) zum Einpressen in die Öffnungen (17) aufweist.

5. Energieführungskette nach Anspruch 3, **dadurch gekennzeichnet, dass** ein längerer biegeelastischer Streifen (20) mit in Längsrichtung verteilten Öffnungen (22) und ein kürzerer biegeelastischer Streifen (21) mit an der Außenseite in Längsrichtung angeordneten, im Längsschnitt zahnförmigen Noppen (23) zum Einrasten in die Öffnungen (22) vorgesehen sind, wobei der kürzere biegeelastische Streifen (21) an seiner Außenseite vor und hinter den Noppen (23) angeordnete Führungslaschen (24) zu Halterung des umgebogenen längeren biegeelastischen Streifens (20) an der Außenseite des kürzeren biegeelastischen Streifens (21) aufweist.

6. Energieführungskette nach einem der Ansprüche 1-5, **dadurch gekennzeichnet, dass** die Kettenlaschen (9; 15; 19) gekröpft ausgebildet sind mit jeweils einem bezüglich der Tragvorrichtung (12; 18; 25) nach außen gekröpften Bereich (32) und einem nach innen gekröpften Bereich (33), die Verbindungsmittel zur gelenkigen Verbindung der Kettenlasche mit benachbarten Kettenlaschen aufweisen, wobei an dem nach außen gekröpften Bereich (32) einer Kettenlasche innen liegend der nach innen gekröpfte Bereich (33) der benachbarten Kettenlasche anliegt.

7. Energieführungskette nach einem der Ansprüche 1-6, **dadurch gekennzeichnet, dass** zur gelenkigen Verbindung der Kettenlaschen (9; 15; 19) untereinander Zapfen (34) in einem Gelenkbereich und dazu korrespondierende Öffnungen (35) im anderen Gelenkbereich einer jeden Kettenlasche vorgesehen sind.

8. Energieführungskette nach Anspruch 7, **dadurch gekennzeichnet, dass** eine Rastverbindung zwischen den Zapfen (34) und Öffnungen (35) der Kettenlaschen vorgesehen ist.

9. Energieführungskette nach einem der Ansprüche 1-8, **dadurch gekennzeichnet, dass** die Tragvorrichtung (12; 18; 25) etwa in der Mitte zwischen den Gelenkachsen (6) der Kettenlaschen (9; 15; 19) angeordnet ist.

## Claims

1. Energy guiding chain for guiding cables, tubes or the like between two connection points that are movable relative to each other, where the chain is configured by a single strand of flat links (9) that are hinged to one another and can be bent relative to one another, and where at least some of the chain links (9) are provided with a support (12) comprising a compartment for receiving cables (2) that is open in the longitudinal direction of the chain, said support (12) furthermore comprising at least one flexible strip (3) with two flexible ends, which can be connected to one another in various positions in the longitudinal direction relative to one another, **characterised in that** the flexible strip (3) passes through lateral openings (11) in flexible webs (10) moulded on the edges of the chain link (9) in the form of a loop, said webs (10) having numerous openings (11) at different heights through which the flexible strip (3) can be passed such that the flexible webs (10) and flexible strip (3) can be made tight around the cable strand.

2. Energy guiding chain according to claim 1, **characterised in that** the flexible strip (3) comprises a cable binder.

3. Energy guiding chain for guiding cables, tubes or the like between two connection points that are movable relative to each other, where the chain is configured by a single strand of flat links comprising chain links (15; 19) that are hinged to one another and can be bent relative to one another, and where at least some of the chain links (15; 19) are provided with a support (18; 25) comprising a compartment for receiving cables (2); that is open in the longitudinal direction of the chain, said support (18; 25) comprising at least one flexible strip (13, 14; 20, 21) with two flexible ends, which can be connected to one another in various positions in the longitudinal direction relative to one another, **characterised in that** two flexible strips (13, 14; 20, 21) in the form of webs are provided, one end of each being moulded on a lateral edge of the chain link (15; 19) and each displaying fastening elements for connection to one another in various positions.

4. Energy guiding chain according to claim 3, **characterised in that** one of the flexible strips (14) has openings (17) distributed in the longitudinal direction and the other flexible strip (13) has nibs (16) distributed in the longitudinal direction that can be pressed into the openings (17).

5. Energy guiding chain according to claim 3, **characterised in that** a longer flexible strip (20) with openings (22) distributed in the longitudinal direction is provided, as well as a shorter flexible strip (21) which has nibs (23) arranged in the longitudinal direction on its outer side that have a longitudinal cross-section of toothed shape for snapping into the openings (22), where guide tabs (24) are provided on the outer side of the shorter flexible strip (21), on either side of the nibs (23), in order to hold the longer flexible strip (20) in place when it is bent over the outer side of the shorter flexible strip (21).

6. Energy guiding chain according to one of the claims 1 to 5, **characterised in that** the chain links (9; 15; 19) are of cranked design, each having in reference to the support (12, 18; 25) an outwardly cranked region (32) and an inwardly cranked region (33), which are provided with connection elements for the hinged connection of the chain links with adjacent chain links, where the inside of the outwardly cranked region (32) of a link is contact with the inwardly cranked region (33) of the adjacent chain link.

7. Energy guiding chain according to one of the claims 1 to 6, **characterised in that** each chain link (9; 15; 19) is provided with pins (34) in one hinge region and corresponding openings (35) in the other hinge region in order to enable hinged connections of the chain links to one another.

8. Energy guiding chain according to claim 7, **characterised in that** the snap connection is provided between the pins (34) and openings (35) of the chain links.

9. Energy guiding chain according to one of the claims 1 to 8, **characterised in that** the support (12; 18; 25) is arranged roughly in the middle between the hinged axes (6) of the chain links (9; 15; 19).

## Revendications

1. Chaîne porte-câbles pour guider des câbles, des tuyaux souples ou analogues entre deux points de raccordement relativement mobiles l'un par rapport à l'autre, dans laquelle la chaîne est réalisée par une ligne de maillons unique comportant des maillons (9) raccordés les uns aux autres de façon articulée et pouvant former des angles entre eux et un dispositif de support (12) comportant un espace ouvert dans la direction longitudinale de la chaîne pour loger les câbles (2) est prévu dans au moins certains des maillons (9), où le dispositif de support (12) comprend au moins une bande élastique en flexion (3) comportant deux extrémités élastiques en flexion, qui peuvent être fixées l'une par rapport à l'autre dans différentes positions dans la direction longitudinale, **caractérisée en ce que** la bande élastique en flexion (3) sous la forme d'une boucle est guidée à travers les ouvertures (11) dans les barrettes élastiques en flexion (10), qui sont formées latéralement dans les zones marginales du maillon (9) et présentent une pluralité d'ouvertures (11) de différentes hauteurs pour le passage de la bande élastique en flexion (3), de sorte que les barrettes élastiques en flexion (10) et la bande élastique en flexion(3) peuvent être appliquées à la périphérie des câbles, des tuyaux souples ou analogues.

2. Chaîne porte-câbles selon la revendication 1, **caractérisée en ce que** la bande élastique en flexion (3) est constituée d'un collier.

3. Chaîne porte-câbles pour le guidage de câbles, de tuyaux souples ou analogues entre deux points de raccordement relativement mobiles l'un par rapport à l'autre, où la chaîne est formée par une ligne de maillons unique comportant des maillons raccordés les uns aux autres de façon articulée et pouvant former des angles entre eux (15 ; 19) et un dispositif de support (18; 25) est prévu comportant un espace ouvert dans la direction longitudinale de la chaîne pour loger les câbles (2) dans au moins certains des maillons (15 ; 19), où le dispositif de support (18 ; 25) comprend au moins une bande élastique en flexion (13, 14 ; 20, 21) comportant deux extrémités élastiques en flexion, qui peuvent être fixées l'une par rapport à l'autre dans différentes positions dans la direction longitudinale, **caractérisée en ce que** deux bandes élastiques en flexion (13, 14 ; 20, 21) sont prévues sous la forme de barrettes, qui sont formées avec une extrémité latéralement dans une zone marginale respective dans le maillon (15 ; 19) et présentent des éléments de fixation pour une fixation dans différentes positions.

4. Chaîne porte-câbles selon la revendication 3, **caractérisée en ce que** l'une des bandes élastiques en flexion (14) présente des ouvertures réparties dans la direction longitudinale et l'autre bande élastique en flexion (13) présente des noppes répartis (16) dans la direction longitudinale pour une fixation par pression dans les ouvertures (17).

5. Chaîne porte-câbles selon la revendication 3, **caractérisée en ce qu'**une bande élastique en flexion plus longue (20) comportant des ouvertures (22) réparties dans la direction longitudinale et une bande élastique en flexion plus courte (21) comportant des noppes (23) en forme de dents en coupe longitudinale et disposés de la direction longitudinale sur le côté extérieur sont prévues pour l'encliquetage dans les ouvertures (22), où la bande élastique en flexion plus courte (21) présente des maillons de guidage (24) disposés sur son côté extérieur devant et derrière les noppes (23) pour la fixation de la bande élastique en flexion plus longue recourbée (20) sur le côté extérieur de la bande élastique en flexion plus courte (21).

6. Chaîne porte-câbles selon l'une des revendications 1 à 5, **caractérisée en ce que** les maillons (9; 15 ; 19) sont réalisés coudés avec respectivement une zone (32) coudée vers l'extérieur par rapport au dispositif de support (12 ; 18 ; 25) et une zone coudée vers l'intérieur (33), qui présentent des moyens de fixation pour une fixation articulée des maillons avec les maillons adjacents, où la zone (33) coudée vers l'intérieur du maillon adjacent vient en contact de la zone (32) coudée vers l'extérieur du maillon se trouvant à l'intérieur.

7. Chaîne porte-câbles selon l'une des revendications 1-6, **caractérisée en ce que** des pivots se trouvant en dessous (34) dans une zone d'articulation et les ouvertures y correspondant (35) dans l'autre zone d'articulation de chaque maillon sont prévus pour une fixation articulée des maillons (9 ; 15 ; 19).

8. Chaîne porte-câbles selon la revendication 7, **caractérisée en ce qu'**une fixation par encliquetage est prévue entre les pivots (34) et les ouvertures (35) des maillons.

9. Chaîne porte-câbles selon l'une des revendications 1 à 8, **caractérisée en ce que** le dispositif de support (12 ; 18 ; 25) est disposé environ au milieu entre les axes d'articulation (6) des maillons (9; 15 ; 19).
